# EUROPÄISCHE PATENTSCHRIFT

(11) **EP 2 952 103 B1**
(45) Veröffentlichungstag und Bekanntmachung des Hinweises auf die Patenterteilung: **08.05.2019**
(21) Anmeldenummer: 14171310.7
(22) Anmeldetag: 05.06.2014
(51) Int. Cl.: A23L 29/262, A23L 27/00, A23L 33/10

(54) **Stoffgemische**
Component mixtures
Mixtures de matières

(43) Veröffentlichungstag der Anmeldung: 09.12.2015
(73) Patentinhaber: Symrise AG, 37603 Holzminden (DE)
(72) Erfinder: Widder, Sabine, 37603 Holzminden (DE); Langer, Kathrin, 37586 Dassel-Hilwartshausen (DE); Krammer, Gerhard, 37603 Holzminden (DE); Pauli, Olga, 37603 Holzminden (DE); Homner, Cornelia, 37603 Holzminden (DE)
(74) Vertreter: Eisenführ Speiser

(56) Entgegenhaltungen:
- US-A- 5 075 114
- US-A1- 2006 159 759
- US-A1- 2011 135 786
- US-A1- 2011 195 115
- HOU H ET AL: "Optimization of enzymatic hydrolysis of Alaska pollock frame for preparing protein hydrolysates with low-bitterness", LWT- FOOD SCIENCE AND TECHNOLOGY, ACADEMIC PRESS, UNITED KINGDOM, Bd. 44, Nr. 2, 1. März 2011 (2011-03-01), Seiten 421-428, XP027445452, ISSN: 0023-6438, DOI: 10.1016/J.LWT.2010.09.009 [gefunden am 2010-10-25]
- ROSE MARIE PANGBORN ET AL: "Effect of hydrocolloids on apparent viscosity and sensory properties of selected beverages", JOURNAL OF TEXTURE STUDIES, FOOD AND NUTRITION PRESS, INC., TRUMBULL, CT, US, Bd. 9, Nr. 4, 1. Januar 1978 (1978-01-01), Seiten 415-436, XP008132972, ISSN: 0022-4901, DOI: 10.1111/J.1745-4603.1978.TB01216.X
- HARMIK SOHI ET AL: "Taste Masking Technologies in Oral Pharmaceuticals: Recent Developments and Approaches", DRUG DEVELOPMENT AND INDUSTRIAL PHARMACY, NEW YORK, NY, US, Bd. 30, Nr. 5, 1. Januar 2004 (2004-01-01) , Seiten 429-448, XP009139647, ISSN: 0363-9045

## Beschreibung

### GEBIET DER ERFINDUNG

Die Erfindung befindet sich auf dem Gebiet der Geschmacksmaskierung und betrifft Stoffgemische aus Cellulosederivaten und Bitterstoffen, Nahrungsmittel, die diese Stoffgemische enthalten, Verfahren zu deren Herstellung sowie die Verwendung der Cellulosederivate zur Maskierung unerwünschter Geschmacksnoten.

### STAND DER TECHNIK

Was dem Körper wohl tut, mundet dem Gaumen selten - diese einfache Formel entspricht nicht nur der Lebenserfahrung, sondern es ist eine Tatsache, dass viele natürliche Wirkstoffe zwar durchaus einen positiven Effekt auf den menschlichen Organismus haben, aber häufig bitter oder adstringierend schmecken.

Zu den wichtigsten Nahrungsergänzungsmitteln, die in den letzten Jahren eine breite Anwendung gefunden haben, zählen die verzweigtkettigen Aminosäuren, die auch als Branched-Chain Amino Acids (BCAA) bezeichnet werden. Darunter versteht man die Aminosäuren Valin, Leucin und Isoleucin. Sie gehören zu den essentiellen Aminosäuren, können also vom Körper nicht selbst gebildet werden, sondern müssen mit der Nahrung zugeführt werden. Im Gegensatz zu anderen Aminosäuren werden die BCAA fast ausschließlich von Muskeln metabolisiert und beeinflussen somit das Muskelwachstum. BCAA werden daher vor allem im Kraftsport und in Ausdauersportarten eingesetzt, um den Muskelaufbau zu verbessern und einer Ermüdung der Muskulatur bei Ausdauerbelastungen entgegenzuwirken.

Auch Peptide und Proteinhydrolysate finden sich in vielen Nahrungsergänzungsmitteln, insbesondere aber hoch angereichert in diätetischen Lebensmittels für ältere Menschen, um die körpereigene Eiweißproduktion zu unterstützen und dadurch extremen Muskelschwund (Sarkopenie) zu verhindern.

Von besonderem Nachteil ist in beiden Fällen jedoch, dass die Aminosäuren ebenso wie die Peptide und Proteinhydrolysate einen bitteren, zuweilen metallischen Geschmack aufweisen, der sich bis dato auch allenfalls unzureichend maskieren lässt, was viele Verbraucher von einem Kauf abhält.

So offenbart beispielsweise die internationale Patentanmeldung WO 2010 018614 A1 (AJINOMOTO) eine Zubereitung mit verzweigten Aminosäuren, bei der versucht wird, den Bittergeschmack der Mischung durch Zugabe spezieller Verdickungs- und Süßungsmittel zu maskieren.

Den gleichen Ansatz verfolgt auch internationale Patentanmeldung WO 2013 147451 A1 (SEOUL PHARMA).

Ein anderes Beispiel stellt die Gruppe der Polyphenole, speziell der Proanthocyanidine und Catechine dar, die in so unterschiedlichen Pflanzen wie Litchis und grünem Tee, Cranberries aber auch in Traubenkernen zu finden sind. Die Stoffgruppen sind seit langem für ihre blutreinigende und blutdrucksenkende Wirkung bekannt, und auch die Flüssig/Flüssig Extraktion der Wirkstoffe stellt keine besondere präparative Schwierigkeit dar. Dennoch ist es bislang auch in diesem Fall kaum möglich, diese Stoffe Nahrungsmitteln als Zusätze beizumischen, da der unangenehme Geschmack auch durch Zusatz intensiver Süßungsmittel nicht überdeckt werden kann.

In diesem Zusammenhang sei auf die US 8,003,150 (KRAFT) hingewiesen. Die Schrift beschreibt die Herstellung und Anwendung von Flavonoiden, welche mit Glucose, Galactose oder weiteren reduzierenden Zuckern versetzt werden. Durch die Addition des Zuckers an die Flavonoide wird die Bitterkeit und Astringenz reduziert.

Gegenstand der japanischen Patentanmeldung JP 2008 118873 A1 (TAIYO) ist die Geschmacksverbesserung von Getränken mit grünem Tee-Extrakt durch Zugabe von hochverzweigten zyklischen Dextrinen.

Die japanische Patentanmeldung JP 08 298930 A1 beschreibt darüber hinaus ein Verfahren, bei welchem zu einem Teeextrakt oder einem Teegetränk ein Dextrin, Cyclodextrin und/oder Stärke sowie das Enzym Cyclomaltodextringlucanotransferase zugegeben wird. Nach Einwirkung des Enzyms ist eine Reduktion der Bitterkeit und Astringenz wahrzunehmen.

Die Auswirkung von niedrig konzentrierten Hydrokolloiden auf die Viskosität und die sensorischen Eigenschaften von kommerziell erhältlichen Getränken wurde von Pangborn et al. (Journal of Texture Studies, 9, 1978, S. 415-436) untersucht. Erhöhte Hydrokolloid-Konzentrationen führen nach Auffassung der Autoren zu abgesenkter Geschmacks- und Aroma-Intensität der Getränke.

Die Aufgabe der vorliegenden Erfindung hat somit darin bestanden, Stoffgemische zur Verfügung zu stellen, die Bitterstoffe, speziell zum einen verzweigtkettige Aminosäuren, Peptide oder Proteinhydrolysate und zum anderen Polyphenole und insbesondere Catechine zusammen mit einem Maskierungsstoff enthalten, so dass die Gemische einen deutlich verbesserten, d.h. nicht mehr so bitteren Geschmack aufweisen. Des Weiteren hat die Anforderung darin bestanden, dass die Stoffgemische hinreichend wasserlöslich sind, um eine einfache Einarbeitung in flüssige Zubereitungen, wie beispielsweise Getränke und insbesondere Instantteegetränke zu gewährleisten.

### BESCHREIBUNG DER ERFINDUNG

Gegenstand der Erfindung sind Stoffgemische, enthaltend
(a) Natriumcarboxymethylcellulose und
(b) mindestens einen Bitterstoff ausgewählt aus der Gruppe, die gebildet wird von phenolischen Glycosiden, Flavanoidglycosiden, hydrolysierbaren oder nicht hydrolysierbaren Tanninen, Flavonen und deren Glycosiden, terpenoiden Bitterstoffen, Catechin, Epicatechin, Epigallocatechin, Gallocatechin, Gallocatechin-3-gallat, verzweigten Aminosäuren, Proteinhydrolysaten, Peptiden und Metallsalzen sowie deren Gemischen sowie gegebenenfalls
(c) Dextrine
   mit der Maßgabe, dass die Komponenten (a) und (b) im Gewichtsverhältnis von 1:1 bis 1:1000 vorliegen.

Überraschenderweise wurde gefunden, dass durch den Zusatz von Natriumcarboxymethylcellulose die adstringierenden und bitteren Geschmackseigenschaften von unterschiedlichsten Bitterstoffen, insbesondere sowohl von verzweigtkettigen Aminosäuren, Peptiden und Proteinhydrolysaten als auch von Catechinenzwar nicht vollständig neutralisiert, so aber doch deutlich verbessert werden. Die Stoffgemische bilden Komplex- bzw. Einschlussverbindungen, die unerwarteter Weise nicht ausfallen, sondern wasserlöslich sind, so dass sie in vielfältiger Weise eingesetzt werden können. Die Erfindung schließt dabei die Erkenntnis ein, dass gerade niedrigviskose Carboxymethylcellulosen gegenüber entsprechenden hochviskosen Spezies eine deutlich bessere Wirkung zeigen, wenn sie viskositätsgleich eingesetzt werden.

Der Zusatz von Dextrinen steigert die maskierende Wirkung noch einmal beträchtlich.

### CELLULOSEDERIVATE

Cellulosederivate, die allgemein, aber nicht erfindungsgemäß als Komponente (a) in Betracht kommen, sind beispielsweise durch Methylierung (Methylcellulose), Ethylierung, Hydroxypropylierung, Veresterung (Celluloseester), Sulfonierung, Nitrierung (Cellulosenitrat), Acetylerung (Celluloseacetat), Oxidation, Xanthogenierung, Quervernetzung, Copolymerisation durch Pfropfen und dergleichen zugänglich. Grundlage zur Herstellung von Derivaten sind zumeist hochreine Cellulosen. Angestrebt wird bei der Herstellung oftmals ein eng begrenzter Polymerisierungsgrad des Celluloserückgrats sowie ein spezielles Substitutionsmuster der Hydroxygruppen der Cellulose, wobei das Substitutionsmuster vorzugsweise unabhängig von der Kettenlänge und auch entlang der einzelnen Polymerketten einheitlich ist.

Erfindungsgemäß ist Komponente (a) das Cellulosederivat Natriumcarboxymethylcellulose.

Bei Carboxymethylcellulosen sowie deren Salzen handelt es sich um Celluloseether, bei denen ein Teil der Hydroxygruppen mit einer Carboxymethylgruppe verknüpft sind. Zur Herstellung dieser auch als "CMC" bezeichneten Stoffe wird Cellulose im stark alkalischen Bereich mit Chloressigsäure umgesetzt. Die erfindungsgemäß einzusetzenden Carboxymethylcellulosen können Polymerisationsgrade (DP) im Bereich von etwa 50 bis etwa 3.500, Molekulargewichte im Bereich von etwa 15 bis etwa 700 KDa und Brookfield-Viskositäten von etwa 15 bis 25.000 mPas aufweisen. Bevorzugt sind Natriumcarboxymethylcellulosen mit Molekulargewichten um 100kDa und darunter, vorzugsweise etwa 15 bis etwa 90 kDa, die in 2 Gew.-%iger wässriger Lösung Viskositäten von 15 bis 100 mPas (LVT-Viskosimeter, Spindel 1, 25°C, 60rmp) aufweisen. Der Substitutionsgrad (DS) kann zwischen 0,8 und 1,5 variieren, wobei Produkte mit niedrigem DS im Bereich 0,8 bis 1,0 bevorzugt sind.

Ein besonders bevorzugtes Handelsprodukt ist WALOCEL CRT 30 PA (DOW), das üblicherweise zur Kontrolle der Rheologie von Getränken als auch als Stabilisator und Schutzkolloid von Proteinen Verwendung findet.

### BITTERSTOFFE

Ein besonderer Vorteil der vorliegenden Erfindung besteht darin, dass Natriumcarboxymethylcellulosen in der Lage sind, den Geschmack sehr vieler sehr unterschiedlicher Bitterstoffe zu maskieren. Erfindungsgemäß ist mindestens ein Bitterstoff enthalten, der ausgewählt ist aus der Gruppe, die gebildet wird von phenolischen Glycosiden, Flavanoidglycosiden, hydrolisierbaren oder nicht hydrolysierbaren Tanninen, Flavonen und deren Glycosiden, terpenoiden Bitterstoffen, Catechin, Epicatechin, Epigallocatechin, Gallocatechin, Gallocatechin-3-gallat, verzweigten Aminosäuren, Proteinhydrolysaten, Peptiden und Metallsalzen sowie deren Gemischen. Zu den Bitterstoffen, die Verwendung finden können, zählen die folgenden Gruppen:
- Catechine, wie beispielsweise Catechin, Epicatechin, Epigallocatechingallat (EGCG), Gallocatechin, Gallocatechin-3-gallat;
- phenolische Glycoside, wie beispielsweise Chinin, Salicin oder Arbutin;
- Flavanoidglycoside, wie beispielsweise Neohesperedin, Eriocitrin, Neoeriocitrin, Narirutin, Hesperidin oder Naringin;
- hydrolisierbare Tannine, wie beispielsweise Gallus- oder Ellagsäureester von Kohlenhydraten und insbesondere Pentagalloylglucose;
- nichthydrolisierbare Tannine, wie beispielsweise galloylierte Catechine oder Epicatechine und deren Oligomeren, insbesondere Proanthyocyanidine, Procyanidine und Thearubigenin;
- Flavone und deren Glycoside, wie beispielsweise Quercetin, Procyanidin B2, Procyanidin B5, Procyanidin C1, Thearubigenin, Rutin, Taxifolin, Myricetin und Myrictrin;
- terpenoide Bitterstoffe, wie beispielsweise Limonin, Nomilin, Lupolone und Homulone;
- verzweigtkettige Aminosäuren, wie beispielsweise Leucin, Isoleucin, Valin, Tryptophan, Prolin, Histidin, Tyrosin, Lysin oder Phenylalanin;
- Peptide, insbesondere solche mit einer Aminosäure aus der Gruppe Leucin, Isoleucin, Valin, Tryptophan, Prolin oder Phenylalanin am N- oder C-Terminus;
- Proteinhydrolysate mit einem Hydrolysegrad von etwa 5 bis etwa 50 % und vorzugsweise etwa 10 bis etwa 35 % sowie
- Metallsalze, wie beispielsweise Kaliumchlorid, Natriumsulfat, Magnesiumsalze, Eisensalze, Aluminiumsalze und Zinksalze.

Unter den Bitterstoffen bevorzugt sind zum einen Valin, Leucin, Isoleucin, Peptide und Proteinhydrolisate und zum anderen Catechin, Epicatechin, Epigallocatechingallat (EGCG), Gallocatechin, Gallocatechin-3-gallat, da der bittere und adstringierende Geschmack dieser Substanzen am besten durch die Natriumcarboxymethylcellulosen überdeckt wird.

### DEXTRINE

Wie sich erweisen hat, kann die bittermaskierende Wirkung der Natriumcarboxymethylcellulose weiter verbessert werden, wenn man als optionale Komponente (c) Dextrine zusetzt.

Bei Dextrinen bzw. Maltodextrinen handelt es sich um Stärkeabbauprodukte, die von ihrer Molekülgröße her zwischen Oligosacchariden und Stärke liegen. Üblicherweise kommen sie in Form von weißem bzw. hellgelbem Pulver vor. Sie werden hauptsächlich aus Weizen-, Kartoffel-, Tapioka- und Maisstärke durch trockene Erhitzung (>150 °C) oder unter Säureeinwirkung gewonnen. In der Natur wird Dextrin zum Beispiel von *Bacterium macerans* erzeugt. Dextrine entstehen auch durch den enzymatischen Abbau von Stärke durch Amylase. Bevorzugt sind Dextrine mit 5 bis 20 und insbesondere 6 bis 10 Dextrose-Äquivalenten (DE-Einheiten). Die Einsatzmenge der Dextrine kann bezogen auf die Bitterstoffe etwa 100:1 bis etwa 1:100, vorzugsweise etwa 50:1 bis etwa 1:50 und insbesondere etwa 10:1 bis etwa 1:10 betragen.

### BEVORZUGTE STOFFGEMISCHE

Wie schon eingangs erläutert, stellt die Kombination aus Natriumcarboxymethylcellulose und verzweigtkettigen Aminosäuren, Peptiden und Proteinhydrolysaten bzw. Catechinen eine bevorzugte Ausführungsform der Erfindung dar, da hier der Effekt der Geschmacksmaskierung am deutlichsten ausfällt. Demzufolge sind die Stoffgemische bevorzugt, bei denen die Bitterstoffe ausgewählt sind aus der Gruppe, die gebildet wird entweder von Valin, Leucin und Isoleucin, Peptide und Proteinhydrolysate oder von Catechin, Epicatechin, Epigallocatechingallat (EGCG), Gallocatechin, Gallocatechin-3-gallat sowie jeweils deren Gemischen.

Soweit als Bitterstoffe verzweigtkettige Aminosäuren eingesetzt werden, so liegt das bevorzugte Gewichtsverhältnis von Isoleucin:Valin:Leucin bei etwa 1:(1 bis 1,2):(2 bis 8).

Naturgemäß gibt es eine untere Grenze, ab der die Cellulosederivate nicht mehr in der Lage sind, die Geschmacksnote der Bitterstoffe zu maskieren. Dies ist dann der Fall, wenn die Bitterstoffe mengenmäßig überwiegen. Vorzugsweise liegen die Komponenten (a) und (b) im Gewichtsverhältnis von 1:1 bis 1:1000, vorzugsweise etwa 1:2 bis etwa 1:500 und insbesondere etwa 1:2 bis 1:50 vor.

### HERSTELLVERFAHREN

Die erfindungsgemäßen Stoffgemische wie vorstehend definiert können nach unterschiedlichen, jedoch sehr ähnlichen Verfahren gewonnen werden:
In einer ersten Ausführungsform stellt man eine Trockenmischung aus dem Bitterstoff - beispielsweise einem Aminosäurepulver - und dem Cellulosederivat, gegebenenfalls zusammen mit Dextrinen, her und löst diese in Wasser auf, wobei sich eine Viskosität von etwa 10 bis etwa 2.000 mPas (Brookfield RVT, 20 °C, Spindel 3) einstellt. Ein alternatives Verfahren besteht darin, dass man einem Getränk, welches den Bitterstoff enthält - wie etwa eine catchechinhaltige Formulierung oder ein Produkt, welches Aminosäuren, Proteinhydrolysate oder Peptide enthält, vorlegt und darin das Cellulosederivat, gegebenenfalls zusammen mit Dextrinen, auflöst.

### GEWERBLICHE ANWENDBARKEIT

Die zugänglichen Stoffgemische können Nahrungsmitteln, speziell Nahrungsergänzungsmitteln und besonders bevorzugt Sportlernahrung zugesetzt werden.

### NAHRUNGSMITTEL

Ein weiterer Gegenstand der Erfindung betrifft daher eben solche Nahrungsmittel, die die erfindungsgemäßen Stoffgemische in Mengen von beispielsweise etwa 0,5 bis etwa 10 und vorzugsweise etwa 2 bis etwa 5 Gew.-% enthalten. Typische Beispiele sind Getränke, speziell Limonaden und Teegetränke, Sojaprodukte, Milchprodukte, insbesondere Milchgetränke und Joghurts, sowie Instantpulver zur Herstellung von Getränken.

### NAHRUNGSMITTELINHALTSSTOFFE

Die Nahrungsmittel können weitere Inhaltsstoffe aufweisen, wie z.B. Süßstoffe, Lebensmittelsäuren, Säureregulatoren, Verdickungsmittel und insbesondere Aromastoffe.

### Süßungsmittel

Als Süßungsmittel oder süß schmeckende Zusatzstoffe kommen zunächst Kohlenhydrate und speziell Zucker in Frage, wie etwa Sucrose/Saccharose, Trehalose, Lactose, Maltose, Melizitose, Raffinose, Palatinose, Lactulose, D-Fructose, D-Glucose, D-Galactose, L-Rhamnose, D-Sorbose, D-Mannose, D-Tagatose, D-Arabinose, L-Arabinose, D-Ribose, D-Glycerinaldehyd, oder Maltodextrin. Ebenfalls geeignet sind pflanzliche Zubereitungen, die diese Stoffe enthalten, beispielsweise auf Basis von Zuckerrüben (Beta vulgaris ssp., Zuckerfraktionen, Zuckersirup, Melasse), Zuckerrohr (Saccharum officinarum ssp., Melasse, Zuckerrohrsirup), Ahornsirup (Acer ssp.) oder Agaven (Agavendicksaft).

### In Betracht kommen auch

- synthetische, d.h. in der Regel enzymatisch hergestellte Stärke oder Zuckerhydrolysate (Invertzucker, Fructosesirup);
- Fruchtkonzentrate (z.B. auf Basis von Äpfeln oder Birnen);
- Zuckeralkohole (z.B. Sorbitol, Mannitol, Erythritol, Threitol, Arabitol, Ribotol, Xylitol, Dulcitol, Lactitol);
- Proteine (z.B. Miraculin, Monellin, Thaumatin, Curculin, Brazzein);
- Süßstoffe (z.B. Magap, Natriumcyclamat, Acesulfam K, Neohesperidin Dihydrochalcon, Saccharin Natriumsalz, Aspartam, Superaspartam, Neotam, Alitam, Sucralose, Lugduname, Carrelame, Sucrononate, Sucrooctate,);
- Süß schmeckende Aminosäuren (z.B. Glycin, D-Leucin, D-Threonin, D-Asparagin, D-Phenylalanin, D-Tryptophan, L-Prolin);
- Weitere süß schmeckende Substanzen, wie z.B. Hernandulcin, Dihydrochalconglykoside, Glycyrrhizin, Glycerrhetinsäure, ihre Derivate und Salze, Stevioside, Rebaudioside, Monatin, Phyllodulcin, Mogroside), oder
- Pflanzen wie z.B. Momordica grosvenori [Luo Han Guo], Glycyrrhizza glabra ssp. [Lakritz], Lippia dulcis, Hydrangea dulcis oder Stevia ssp. (z.B. Stevia rebaudiana) und die daraus gewonnenen Extrakte.

### Säuren und Säuerungsmittel

Die Nahrungsmittel können Säuren enthalten. Säuren sind bevorzugt in Lebensmitteln zulässige Säuren, insbesondere die hier genannten:
E 260 - Essigsäure
E 270 - Milchsäure
E 290 - Kohlendioxid
E 296 - Apfelsäure
E 297 - Fumarsäure
E 330 - Citronensäure
E 331 - Natriumcitrat
E 332 - Kaliumcitrat
E 333 - Calciumcitrat
E 334 - Weinsäure
E 335 - Natriumtartrat
E 336 - Kaliumtartrat
E 337 - Natrium-Kaliumtartrat
E 338 - Phosphorsäure
E 353 - Metaweinsäure
E 354 - Calciumtartrat
E 355 - Adipinsäure
E 363 - Bernsteinsäure
E 380 - Triammoniumcitrat
E 513 - Schwefelsäure
E 574 - Gluconsäure
E 575 - Glucono-delta-Lacton

### Säureregulatoren

Säureregulatoren sind Lebensmittelzusatzstoffe, die den Säuregrad oder die Basizität und damit den gewünschten pH-Wert eines Lebensmittels konstant halten. Es handelt sich meist um organische Säuren und deren Salze, Carbonate, seltener auch um anorganische Säuren und deren Salze. Der Zusatz eines Säureregulators verstärkt teils die Stabilität und Festigkeit des Lebensmittels und verbessert die Wirkung von Konservierungsmitteln. Im Gegensatz zu Säuerungsmitteln werden sie nicht zur Geschmacksveränderung von Lebensmitteln benutzt. Ihre Wirkung beruht auf der Bildung eines Puffersystems im Lebensmittel, das in der Lage ist, Säuren und Laugen so auszugleichen, daß der pH-Wert sich nicht oder nur geringfügig ändert. Beispiele sind:
E 170 - Calciumcarbonat
E 260-263 - Essigsäure und Acetate
E 270 - Milchsäure
E 296 - Äpfelsäure
E 297 - Fumarsäure
E 325-327 - Lactate (Milchsäure)
E 330-333 - Citronensäure und Citrate
E 334-337 - Weinsäure und Tartrate
E 339-341 - Orthophosphate
E 350-352 - Malate (Äpfelsäure)
E 450-452 - Di-, Tri- und Polyphosphate
E 500-504 - Carbonate (Kohlensäure)
E 507 - Salzsäure und Chloride
E 513-517 - Schwefelsäure und Sulfate
E 524-528 - Hydroxide
E 529-530 - Oxide
E 355-357 - Adipinsäure und Adipate
E 574-578 - Gluconsäure und Gluconate

### Verdickungsmittel

**Verdickungsmittel,** auch Dickungsmittel oder Bindemittel genannt, werden meist aus Pflanzen und Algen gewonnen. Sie werden auch als Hydrokolloide bezeichnet, worunter man eine Gruppe von Polysacchariden versteht, die in Wasser in Lösung gehen und ein hohes Vermögen zur Gelbildung haben. Auf Grund ihrer Eigenschaft, Wasser zu binden, werden Verdickungsmittel meist wässrigen Lösungen zugesetzt, um deren Viskosität zu erhöhen. Des Weiteren sollen sie das Lebensmittel strukturieren und dadurch das Mundgefühl bzw. einen bestimmten Kaueindruck beim Verzehr beeinflussen. Bei den meisten Verdickungsmitteln handelt es sich um lineare oder verzweigte Makromoleküle (z. B. Polysaccharide oder Proteine), die durch intermolekulare Wechselwirkungen, wie Wasserstoffbrücken, hydrophobe Wechselwirkungen oder lonenbeziehungen miteinander interagieren können. Beispiele sind:
E 400 - Alginsäure
E 401 - Natriumalginat
E 402 - Kaliumalginat
E 403 - Ammoniumalginat
E 404 - Calciumalginat
E 405 - Propylenglycolalginat
E 406 - Agar Agar
E 407 - Carrgeen, Furcelleran
E 410 - Johannisbrotkernmehl
E 412 - Guarkernmehl
E 413 - Traganth
E 414 - Gummi arabicum
E 415 - Xanthan
E 416 - Karaya (Indischer Traganth)
E 417 - Tarakernmehl (Peruanisches Johannisbrotkernmehl)
E 418 - Gellan
E 440 - Pektin, Opekta
E 440ii - Amidiertes Pektin
E 460 - Mikrokristalline Cellulose, Cellulosepulver
E 461 - Methylcellulose
E 462 - Ethylcellulose
E 463 - Hydroxypropylcellulose
E 465 - Methylethylcellulose
E 466 - Carboxymethylcellulose

### Geschmacksbeeinflussende Stoffe

**Aromastoffe.** Die erfindungsgemäßen oralen Zubereitungen können einen oder mehrere Aromastoffe enthalten. Typische Beispiele umfassen: Acetophenon, Allylcapronat, alpha-Ionon, beta-Ionon, Anisaldehyd, Anisylacetat, Anisylformiat, Benzaldehyd, Benzothiazol, Benzylacetat, Benzylalkohol, Benzylbenzoat, beta-Ionon, Butylbutyrat, Butylcapronat, Butylidenphthalid, Carvon, Camphen, Caryophyllen, Cineol, Cinnamylacetat, Citral, Citronellol, Citronellal, Citronellylacetat, Cyclohexylacetat, Cymol, Damascon, Decalacton, Dihydrocumarin, Dimethylanthranilat, Dimethylanthranilat, Dodecalacton, Ethoxyethylacetat, Ethylbuttersäure, Ethylbutyrat, Ethylcaprinat, Ethylcapronat, Ethylcrotonat, Ethylfuraneol, Ethylguajakol, Ethylisobutyrat, Ethylisovalerianat, Ethyllactat, Ethylmethylbutyrat, Ethylpropionat, Eucalyptol, Eugenol, Ethylheptylat, 4-(p-Hydroxyphenyl)-2-butanon, gamma-Decalacton, Geraniol, Geranylacetat, Geranylacetat, Grapefruitaldehyd, Methyldihydrojasmonat (z.B. Hedion®), Heliotropin, 2-Heptanon, 3-Heptanon, 4-Heptanon, trans-2-Heptenal, cis-4-Heptenal, trans-2-Hexenal, cis-3-Hexenol, trans-2-Hexensäure, trans-3-Hexensäure, cis-2-Hexenylacetat, cis-3-Hexenylacetat, cis-3-Hexenylcapronat, trans-2-Hexenylcapronat, cis-3-Hexenylformiat, cis-2-Hexylacetat, cis-3-Hexylacetat, trans-2-Hexylacetat, cis-3-Hexylformiat, para-Hydroxybenzylaceton, Isoamylalkohol, Isoamylisovalerianat, Isobutylbutyrat, Isobutyraldehyd, Isoeugenolmethylether, Isopropylmethylthiazol, Laurinsäure, Leavulinsäure, Linalool, Linalooloxid, Linalylacetat, Menthol, Menthofuran, Methylanthranilat, Methylbutanol, Methylbuttersäure, 2-Methylbutylacetat, Methylcapronat, Methylcinnamat, 5-Methylfurfural, 3,2,2-Methylcyclopentenolon, 6,5,2-Methylheptenon, Methyldihydrojasmonat, Methyljasmonat, 2-Methylmethylbutyrat, 2-Methyl-2-Pentenolsäure, Methylthiobutyrat, 3,1-Methylthiohexanol, 3-Methylthiohexylacetat, Nerol, Nerylacetat, trans,trans-2,4-Nonadienal, 2,4-Nonadienol, 2,6-Nonadienol, 2,4-Nonadienol, Nootkaton, delta Octalacton, gamma Octalacton, 2-Octanol, 3-Octanol, 1,3-Octenol, 1-Octylacetat, 3-Octylacetat, Palmitinsäure, Paraldehyd, Phellandren, Pentandion, Phenylethylacetat, Phenylethylalkohol, Phenylethylisovalerianat, Piperonal, Propionaldehyd, Propylbutyrat, Pulegon, Pulegol, Sinensal, Sulfurol, Terpinen, Terpineol, Terpinolen, 8,3-Thiomenthanon, 4,4,2-Thiomethylpentanon, Thymol, delta-Undecalacton, gamma-Undecalacton, Valencen, Valeriansäure, Vanillin, Acetoin, Ethylvanillin, Ethylvanillinisobutyrat (= 3-Ethoxy-4-isobutyryloxybenzaldehyd), 2,5-Dimethyl-4-hydroxy-3(2H)-furanon und dessen Abkömmlinge (dabei vorzugsweise Homofuraneol (= 2-Ethyl-4-hydroxy-5-methyl-3(2H)-furanon), Homofuronol (= 2-Ethyl-5-methyl-4-hydroxy-3(2H)-furanon und 5-Ethyl-2-methyl-4-hydroxy-3(2H)-furanon), Maltol und Maltol-Abkömmlinge (dabei vorzugsweise Ethylmaltol), Cumarin und Cumarin-Abkömmlinge, gamma-Lactone (dabei vorzugsweise gamma-Undecalacton, gamma-Nonalacton, gamma-Decalacton), delta-Lactone (dabei vorzugsweise 4-Methyldeltadecalacton, Massoilacton, Deltadecalacton, Tuberolacton), Methylsorbat, Divanillin, 4-Hydroxy-2(oder 5)-ethyl-5(oder 2)-methyl-3(2H)furanon, 2-Hydroxy-3-methyl-2-cyclopentenon, 3-Hydroxy-4,5-dimethyl-2(5H)-furanon, Essigsäureisoamylester, Buttersäureethylester, Buttersäure-n-butylester, Buttersäureisoamylester, 3-Methyl-buttersäureethylester, n-Hexansäureethylester, n-Hexansäureallylester, n-Hexansäure-n-butylester, n-Octansäureethylester, Ethyl-3-methyl-3-phenylglycidat, Ethyl-2-trans-4-cis-decadienoat, 4-(p-Hydroxyphenyl)-2-butanon, 1,1-Dimethoxy-2,2,5-trimethyl-4-hexan, 2,6-Dimethyl-5-hepten-1-al und Phenylacetaldehyd, 2-Methyl-3-(methylthio)furan, 2-Methyl-3-furanthiol, bis(2-Methyl-3-furyl)disulfid, Furfurylmercaptan, Methional, 2-Acetyl-2-thiazolin, 3-Mercapto-2-pentanon, 2,5-Dimethyl-3-furanthiol, 2,4,5-Trimethylthiazol, 2-Acetylthiazol, 2,4-Dimethyl-5-ethylthiazol, 2-Acetyl-1-pyrrolin, 2-Methyl-3-ethylpyrazin, 2-Ethyl-3,5-dimethylpyrazin, 2-Ethyl-3,6-dimethylpyrazin, 2,3-Diethyl-5-methylpyrazin, 3-Isopropyl-2-methoxypyrazin, 3-Isobutyl-2-methoxypyrazin, 2-Acetylpyrazin, 2-Pentylpyridin, (E,E)-2,4-Decadienal, (E,E)-2,4-Nonadienal, (E)-2-Octenal, (E)-2-Nonenal, 2-Undecenal, 12-Methyltridecanal, 1-Penten-3-on, 4-Hydroxy-2,5-dimethyl-3(2H)-furanon, Guajakol, 3-Hydroxy-4,5-dimethyl-2(5H)-furanon, 3-Hydroxy-4-methyl-5-ethyl-2(5H)-furanon, Zimtaldehyd, Zimtalkohol, Methylsalicylat, Isopulegol sowie (hier nicht explizit genannte) Stereoisomere, Enantiomere, Stellungsisomere, Diastereomere, cis/trans-Isomere bzw. Epimere dieser Substanzen.

**Geschmacksmodulatoren.** Diese Zubereitungen- wie auch die Aromamischungenkönnen des Weiteren zusätzliche Aromastoffe zur Beeinflussung oder Modulierung eines salzigen, gegebenenfalls leicht sauren und/oder Umami-Geschmackseindrucks enthalten. Es werden somit die erfindungsgemäßen Produkte bzw. Aromamischungen in Kombination mit zumindest einer weiteren zur Verstärkung eines angenehmen Geschmackseindrucks (salzig, umami, gegebenenfalls leicht sauer) geeigneten Substanz verwendet. Hierbei bevorzugt sind salzig schmeckende Verbindungen und salzverstärkende Verbindungen. Bevorzugte Verbindungen sind in der WO 2007/045566 offenbart. Ferner bevorzugt sind Umami-Verbindungen wie in der WO 2008/046895 und EP 1 989 944 beschrieben sind.

Bevorzugte Stoffe sind solche, die einen Geruchseindruck verursachen, der mit süßem Geschmack assoziiert wird, wobei der oder die Stoffe vorzugsweise ausgewählt sind aus der Gruppe bestehend aus:

Vanillin, Ethylvanillin, Ethylvanillinisobutyrat (= 3 Ethoxy-4-isobutyryloxy-benzaldehyd), Furaneol (2,5-Dimethyl-4-hydroxy-3(2H)-furanon) und Abkömmlinge (z.B. Homofuraneol, 2-Ethyl-4-hydroxy-5-methyl-3(2H)-furanon), Homofuronol (2-Ethyl-5-methyl-4-hydroxy-3(2H)-furanon und 5-Ethyl-2-methyl-4-hydroxy-3(2H)-furanon), Maltol und Abkömmlinge (z.B. Ethylmaltol), Cumarin und Abkömmlinge, gamma-Lactone (z.B. gamma-Undecalacton, gamma-Nonalacton), delta-Lactone (z.B. 4-Methyldeltalacton, Massoilacton, Deltadecalacton, Tuberolacton), Methylsorbat, Divanillin, 4-Hydroxy-2(oder 5)-ethyl-5(oder 2)-methyl-3(2H)furanon, 2-Hydroxy-3-methyl-2-cyclopentenone, 3-Hydroxy-4,5-dimethyl-2(5H)-furanon, Fruchtester und Fruchtlactone (z.B. Essigsäure-n-butylester, Essigsäureisoamylester, Propionsäureethylester, Buttersäureethylester, Buttersäure-n-butylester, Buttersäurei-soamylester, 3-Methyl-buttersäureethylester, n-Hexansäureethylester, n-Hexansäure-allylester, n-Hexansäure-n-butylester, n-Octansäureethylester, Ethyl-3-methyl-3-phenylglycidat, Ethyl-2-trans-4-cis-decadienoat), 4-(p-Hydroxyphenyl)-2-butanon, 1,1-Dimethoxy-2,2,5-trimethyl-4-hexan, 2,6-Dimethyl-5-hepten-1-al, 4-Hydroxyzimtsäure, 4-Methoxy-3-hydroxyzimtsäure, 3-Methoxy-4-hydroxyzimtsäure, 2-Hydroxyzimtsäure, 2,4-Dihydroxybenzoesäure, 3-Hydroxybenzoesäure, 3,4-Dihydroxybenzoesäure, Vanillinsäure, Homovanillinsäure, Vanillomandelsäure und Phenylacetaldehyd.

**Wirkstoffe zur Maskierung von unangenehmen Geschmackseindrücken.** Weiterhin können die oralen Zubereitungen auch zusätzliche Stoffe umfassen, die ebenfalls zur Maskierung von bitteren und/oder adstringierenden Geschmackseindrücken dienen. Diese weiteren Geschmackskorrigenzien werden z. B. aus der folgenden Liste ausgewählt: Nucleotide (z.B. Adenosin-5'-monophosphat, Cytidin-5'-monophosphat) oder deren Salze, Lactisole, Natriumsalze (z.B. Natriumchlorid, Natriumlactat, Natriumcitrat, Natriumacetat, Natriumgluconoat), Hydroxyflavanone, dabei bevorzugt Eriodictyol, Sterubin (Eriodictyol-7-methylether), Homoeriodictyol, und deren Natrium-, Kalium-, Calcium-, Magnesium- oder Zinksalze (insbesondere solche wie beschrieben in EP 1258200 A2, die bezüglich der darin offenbarten entsprechenden Verbindungen auf dem Wege der Verweisung Bestandteil dieser Anmeldung wird), Hydroxybenzoesäureamide, dabei vorzugsweise 2,4-Dihydroxybenzoesäurevanillylamid, 2,4-Dihydroxybenzoesäure-*N*-(4-hydroxy-3-methoxybenzyl)amid, 2,4,6-Trihydroxybenzoesäure-*N*-(4-hydroxy-3-methoxybenzyl)amid, 2-Hydroxy-benzoesäure-*N*-4-(hydroxy-3-methoxybenzyl)amid, 4-Hydroxybenzoesäure-*N*-(4-hydroxy-3-methoxybenzyl)amid, 2,4-Dihydroxybenzoesäure-*N*-(4-hydroxy-3-methoxybenzyl)amid-Mono-natriumsalz, 2,4-Dihydroxybenzoesäure-*N*-2-(4-hydroxy-3-methoxyphenyl)ethylamid, 2,4-Dihydroxybenzoesäure-*N*-(4-hydroxy-3-ethoxybenzyl)amid, 2,4-Dihydroxybenzoesäure-*N*-(3,4-dihydroxybenzyl)amid und 2-Hydroxy-5-methoxy-*N*-[2-(4-hydroxy-3-methoxyphenyl)ethyl]amid; 4-Hydroxybenzoesäurevanillylamide (insbesondere solche wie beschrieben in WO 2006/024587, die bezüglich der darin offenbarten entsprechenden Verbindungen auf dem Wege der Verweisung Bestandteil dieser Anmeldung wird); Hydroxydeoxybenzoine, dabei vorzugsweise 2-(4-Hydroxy-3-methoxyphenyl)-1-(2,4,6-trihydroxyphenyl)ethanon, 1-(2,4-Dihydroxyphenyl)-2-(4-hydroxy-3-methoxyphenyl)-ethanon und 1-(2-Hydroxy-4-methoxyphenyl)-2-(4-hydroxy-3-methoxyphenyl)ethanon) (insbesondere solche wie beschrieben in WO 2006/106023 beschrieben, die bezüglich der darin offenbarten entsprechenden Verbindungen auf dem Wege der Verweisung Bestandteil dieser Anmeldung wird); Hydroxyphenylalkandione, wie zum Beispiel Gingerdion-[2], Gingerdion-[3], Gingerdion-[4], Dehydrogingerdion-[2], Dehydrogingerdion-[3], Dehydrogingerdion-[4]) (insbesondere solche wie beschrieben in WO 2007/003527, die bezüglich der darin offenbarten entsprechenden Verbindungen auf dem Wege der Verweisung Bestandteil dieser Anmeldung wird); Diacetyltrimere (insbesondere solche wie beschrieben in WO 2006/058893, die bezüglich der darin offenbarten entsprechenden Verbindungen auf dem Wege der Verweisung Bestandteil dieser Anmeldung wird); gamma-Aminobuttersäuren (insbesondere solche wie beschrieben in WO 2005/096841, die bezüglich der darin offenbarten entsprechenden Verbindungen auf dem Wege der Verweisung Bestandteil dieser Anmeldung wird); Divanillin (insbesondere solche wie beschrieben in WO 2004/078302, die bezüglich der darin offenbarten entsprechenden Verbindungen auf dem Wege der Verweisung Bestandteil dieser Anmeldung wird) und 4-Hydroxydihydrochalconen (vorzugsweise wie beschrieben in US 2008/0227867 A1, die bezüglich der darin offenbarten entsprechenden Verbindungen auf dem Wege der Verweisung Bestandteil dieser Anmeldung wird), dabei insbesondere Phloretin und Davidigenin, Aminosäuren oder Gemische von Molkeproteinen mit Lecithinen, Hesperetin wie in der WO 2007/014879 offenbart, die hinsichtlich dieser Verbindungen auf dem Wege der Verweisung Bestandteil dieser Anmeldung wird, 4-Hydroxydihydrochalkonen wie in der WO 2007/107596 offenbart, die hinsichtlich dieser Verbindungen auf dem Wege der Verweisung Bestandteil dieser Anmeldung wird, oder Propenylphenylglycosiden (Chavicolglycosiden) wie in EP 1955601 A1 beschrieben, die hinsichtlich dieser Verbindungen auf dem Wege der Verweisung Bestandteil dieser Anmeldung wird, oder Extrakten aus *Rubus suavissimus*, Extrakte aus *Hydrangea macrophylla* wie in EP 2298084 A1 beschrieben, Pellitorin und abgeleiteten Aromakompositionen wie in EP 2008530 A1 beschrieben, Umami-Verbindungen wie in WO 2008/046895 A1 und EP 1989944 A1 beschrieben, Umami-Verbindungen wie beschrieben in EP 2064959 A1 bzw. EP 2135516 A1, Vanillyllignanen, Enterodiol, sowie N-Decadienoylaminosäuren und deren Gemische.

### Vitamine

In einer weiteren Ausführungsform der vorliegenden Erfindung können die Nahrungsergänzungsmittel als weitere fakultative Gruppe von Zusatzstoffen Vitamine enthalten. Vitamine verfügen über unterschiedlichste biochemische Wirkungsweisen. Einige wirken ähnlich wie Hormone und regulieren den Mineralmetabolismus (z.B. Vitamin D), oder wirken auf das Wachstum von Zellen und Gewebe sowie die Zelldifferenzierung (z.B. einige Formen des Vitamin A). Andere stellen Antioxidantien dar (z.B. Vitamin E und unter bestimmten Umständen auch Vitamin C). Die größte Zahl von Vitaminen (z.B. die B-Vitamine) stellen Vorstufen für enzymatische Co-Faktoren dar, die Enzyme dabei unterstützen, bestimmte Prozesse im Metabolismus zu katalysieren. In diesem Zusammenhang können Vitamin mitunter eng an die Enzyme gebunden sein, beispielsweise als Teil der prostetischen Gruppe: ein Beispiel hierfür ist Biotin, das ein Teil des Enzyms ist, welches für den Aufbau von Fettsäuren verantwortlich ist. Vitamine können andererseits auch weniger stark gebunden sein und dann als Co-Katalysatoren wirken, beispielsweise als Gruppen, die sich leicht abspalten lassen und chemische Gruppen oder Elektronen zwischen den Molekülen transportieren. So transportiert beispielsweise Folsäure Methyl-, Formyl- und Methylengruppen in die Zelle. Obwohl ihre Unterstützung in Enzym-Substrat-Reaktionen wohl bekannt ist, sind auch ihre übrigen Eigenschaften für den Körper von großer Bedeutung.

Im Rahmen der vorliegenden Erfindung kommen als Vitamine Stoffe in Betracht, die ausgewählt sind aus der Gruppe bestehend aus
- Vitamin A (Retinol, Retinal, Betakarotin),
- Vitamin B₁ (Thiamin),
- Vitamin B₂ (Riboflavin),
- Vitamin B₃ (Niacin, Niacinamid),
- Vitamin B₅ (Panthothensäure),
- Vitamin B₆ (Pyridoxin, Pyridoxamin, Paridoxal),
- Vitamin B₇ (Biotin),
- Vitamin B₉ (Folsäure, Folinsäure),
- Vitamin B₁₂ (Cyanobalamin, Hydroxycobalmin, Methylcobalmin),
- Vitamin C (Ascorbinsäure),
- Vitamin D (Cholecalciferol),
- Vitamin E (Tocopherole, Tocotrienole) und
- Vitamin K (Phyllochinon, Menachinon).
Die bevorzugten Vitamine sind neben der Ascorbinsäure die Gruppe der Tocopherole.

### Prebiotische Stoffe

In einer weiteren Ausgestaltung der Erfindung können die Zubereitungen des Weiteren Prebiotische Stoffe (Prebiotika) enthalten. Prebiotika werden als unverdauliche Nahrungsbestandteile definiert, deren Verabreichung das Wachstum oder die Aktivität einer Reihe nützlicher Bakterien im Dickdarm stimuliert. Die Zugabe von prebiotischen Verbindungen verbessert die Stabilität der Anthocyanine gegenüber Abbauprozessen im Darmtrakt. Im Folgenden werden verschiedene Stoffe, insbesondere Kohlenhydrate genannt, die als Prebiotika besonders bevorzugt sind.

**Fructooligosaccharide.** Fructooligosaccharide oder abgekürzt FOS umfassen insbesondere kurzkettige Vertreter mit 3 bis 5 Kohlenstoffatomen, wie beispielsweise D-Fructose und D-Glucose. FOS, auch als Neozucker bezeichnet, werden kommerziell auf Basis von Saccharose und dem aus Pilzen gewonnenen Enzym Fructosyltransferase hergestellt. FOS unterstützen insbesondere das Wachstum von Bifidobakterien im Darm und werden vor allem in den USA zusammen mit probiotischen Bakterien in verschiedenen funktionalisierten Lebensmitteln vermarktet.

**Inuline.** Inuline zählen zu einer Gruppe von natürlich vorkommenden Fructose enthaltenden Oligosachhariden. Sie gehören zu einer Klasse von Kohlenhydraten, die als Fructane bezeichnet werden. Ihre Gewinnung erfolgt aus den Wurzeln der Chicoree-Pflanze (Cichorium intybus) oder so genannten Jerusalem-Artischocken. Inuline bestehen überwiegend aus Fructoseeinheiten und weisen typisch eine Glucoseeinheit als Endgruppe auf. Die Fructoseeinheiten sind dabei miteinander über eine beta-(2-1)glykosidische Bindung verknüpft. Der mittlere Polymerisationsgrad von Inulinen, die als Prebiotika im Nahrungsmittelbereich Anwendung finden, liegt bei 10 bis 12. Inuline stimulieren ebenfalls das Wachstum von Bifidobakterien im Dickdarm.

**Isomaltooligosaccharide.** Bei dieser Gruppe handelt es sich um eine Mischung von alpha-D-verknüpften Glucoseoligomeren, einschließlich Isomaltose, Panose, Isomaltotetraose, Isomaltopentaose, Nigerose, Kojibiose, Isopanose und höherer verzweigter Oligosaccharide. Isomaltooligosaccharide werden über verschiedene enzymatische Wege hergestellt. Sie stimulieren ebenfalls das Wachstum von Bifidobakterien und Lactobacillen im Dickdarm. Isomaltooligosaccharide werden speziell in Japan als Nahrungsmittelzusatzstoffe in funktionalisierten Lebensmitteln eingesetzt. Inzwischen finden sie auch in den USA Verbreitung.

**Lactilol.** Lactilol ist das Disaccharid der Lactulose. Seine medizinische Anwendung findet gegen Verstopfung und bei hepatischer Enzephalopathie. In Japan wird Lactilol als Prebiotika eingesetzt. Es widersteht dem Abbau im oberen Verdauungstrakt, wird aber durch verschiedene Darmbakterien fermentiert, was zu einem Anstieg der Biomasse an Bifidobakterien und Lactobacillen im Darm führt. Lactilol ist auch unter der chemischen Bezeichnung 4-0-(beta-D-galactopyranosyl)-D-glucitol bekannt. Der medizinsche Anwendungsbereich von Lactilol in den USA ist wegen fehlender Studien beschränkt; in Europa wird es vorzugsweise als Süßstoff eingesetzt.

**Lactosucrose.** Lactosucrose ist ein Trisaccharid, das sich aus D-Galactose, D-Glucose und D-Fructose aufbaut. Lactosucrose wird durch enzymatischen Transfer des Galactosylrestes in der Lactose auf die Sucrose hergestellt. Es wird weder im Magen noch im oberen Teil des Darmtraktes abgebaut und wird ausschließlich von Bifidobakterien zu Wachstum konsumiert. Unter physiologischen Gesichtspunkten wirkt Lactosucrose als Stimulator für das Wachstum der Darmflora. Lactosucrose ist ebenfalls bekannt als 4G-beta-D-galactosucrose. Es ist in Japan als Nahrungsmittelzusatzstoff und als Bestandteil von funktionalisierten Lebensmitteln weit verbreitet, insbesondere auch als Zusatzstoff für Joghurts. Lactosucrose wird derzeit auch in den USA für einen ähnlichen Anwendungszweck getestet.

**Lactulose.** Lactulose ist ein halbsynthetisches Disaccharid aus D-Lactose und D-Fructose. Die Zucker sind über eine beta-glykosidische Bindung verknüpft, was sie resistent gegen Hydrolyse durch Verdauungsenzyme macht. Stattdessen wird Lactulose durch eine beschränkte Anzahl von Darmbakterien fermentiert, was zu einem Wachstum insbesondere von Lactobacillen und Bifidobakterien führt. Lactulose stellt in den USA ein verschreibungspflichtiges Medikament gegen Verstopfung und hepatische Enzephalopathie dar. In Japan hingegen wird es als Nahrungsmittelzusatzstoff und Bestandteil von funktionalisierten Lebensmitteln frei verkauft.

**Pyrodextrine.** Pyrodextrine umfassen eine Mischung von Glucose enthaltenden Oligosacchariden, die bei der Hydrolyse von Stärke gebildet werden. Pyrodextrine fördern die Proliferation von Bifidobakterien im Dickdarm. Auch sie werden im oberen Darmbereich nicht abgebaut.

**Sojaoligosaccharide.** Bei dieser Gruppe handelt es sich um Oligosaccharide, die im Wesentlichen nur in Sojabohnen und darüber noch in anderen Bohnen sowie Erbsen zu finden sind. Die beiden maßgeblichen Vertreter sind das Trisaccharid Raffinose und das Tetrasaccharid Stachyose. Raffinose setzt sich aus jeweils einem Molekül D-Galactose, D-Glucose und D-Fructose zusammen. Stachyose besteht aus zwei Molekülen D-Galactose sowie jeweils einem Molekül D-Glucose und D-Fructose. Sojaoligosacccharide stimulieren das Wachstum von Bifidobakterien im Dickdarm und werden in Japan bereits als Nahrungsmittelzusatzstoffe sowie in funktionalisierten Lebensmitteln eingesetzt. In den USA werden sie für diese Anwendung derzeit getestet.

**Transgalactooligosaccharide.** Transgalactooligosaccharide (TOS) stellen Mischungen von Oligosacchariden auf Basis D-Glucose und D-Galactose dar. TOS werden ausgehend von D-Lactose mit Hilfe des Enzyms Betaglucosidase aus Aspergillus oryzae hergestellt. Wie viele andere Prebiotika sind auch TOS im Dünndarm stabil und stimulieren das Wachstum von Bifidobakterien im Dickdarm. TOS werden sowohl bereits in Europa als auch in Japan als Nahrungsmittelzusatzstoffe vermarktet.

**Xylooligosaccharide.** Xylooligosaccharide enthalten beta-1,4-verknüpfte Xyloseeinheiten. Der Polymerisationsgrad der Xylooligosaccharide liegt zwischen 2 und 4. Sie werden durch enzymatische Hydrolyse des Polysaccharids Xylan erhalten. Sie werden bereits in Japan als Nahrungsmittelzusatzstoffe vermarktet, in den USA befinden sie sich noch in der Testphase.

**Biopolymere.** Geeignete Biopolymere, die ebenfalls als Prebiotika in Betracht kommen, wie beispielsweise Beta-Glucane, zeichnen sich dadurch aus, dass sie auf pflanzlicher Basis hergestellt werden, beispielsweise kommen als Rohstoffquellen Cerealien wie Hafer und Gerste, aber auch Pilze, Hefen und Bakterien in Frage. Außerdem geeignet sind mikrobiell hergestellte Zellwandsuspensionen oder ganze Zellen mit hohem Beta-Glucan Gehalt. Restliche Anteile an Monomeren weisen 1-3 und 1-4 oder 1-3 und 1-6 Verknüpfungen auf, wobei der Gehalt stark variieren kann. Vorzugsweise werden Beta-Glucane auf Basis von Hefen, insbesondere Saccharomyces, speziell Saccharomyces cerevisiae, erhalten. Andere geeignete Biopolymere sind Chitin und Chitinderivate, insbesondere Oligoglucosamin und Chitosan, das ein typisches Hydrokolloid darstellt.

**Galactooligosaccharide (GOS)**. Galacto-Oligosaccharide werden durch die enzymatische Umwandlung von Lactose, einer Komponente von Rindermilch, erzeugt. GOS umfassen im Allgemeinen eine Kette von Galactose-Einheiten, die durch aufeinanderfolgende Transgalactosylierung-Reaktionen gebildet werden, und die eine terminale Glucoseeinheit aufweisen. Terminale Glucoseeinheiten werden zumeist durch eine frühzeitige Hydrolyse von GOS gebildet. Der Polymerisationsgrad der GOS kann ziemlich stark schwanken und reicht von 2 bis 8 Monomereinheiten. Eine Reihe von Faktoren bestimmt dabei den Aufbau und die Reihenfolge Monomereinheiten: die Enzym-Quelle, das Ausgangsmaterial (Lactose-Konzentration und Ursprung der Lactose), die am Prozess beteiligten Enzyme, Bedingungen bei der Verarbeitung und die Zusammensetzung des Mediums.

### Probiotische Mikroorganismen

Probiotische Mikroorganismen, auch als Probiotika bezeichnet, stellen lebende Mikroorganismen dar, die für den Wirt nützliche Eigenschaften besitzen. Gemäß der Definition der FAO/WHO handelt es sich um "lebende Mikroorganismen, die bei angemessener Dosierung dem Wirt einen Gesundheitsvorteil vermitteln". Milchsäurebakterien (LAB) und Bifidobakterien stellen die bekanntesten Probiotika dar; es können aber auch verschiedene Hefen und Bazillen Verwendung finden. Probiotika werden üblicherweise als Bestandteil von fermentierten Nahrungsmitteln aufgenommen, denen man spezielle Lebendkulturen zugesetzt hat, wie z.B. Joghurt, Sojajoghurt oder andere probiotische Nahrungsmittel. Darüber hinaus sind auch Tabletten, Kapseln, Pulver und Sachets erhältlich, die die Mikroorganismen in gefriergetrockneter Form enthalten. Tabelle A gibt einen Überblick über handelsübliche Probiotika und den zugehörigen Auslobungen zur Gesundheit, die eingesetzt werden können.

**Tabelle A:**

| Probiotische Stoffe | | | |
|---|---|---|---|
| **Stamm** | **Bezeichnung** | **Hersteller** | **Auslobung** |
| *Bacillus coagulans* GBI-30, 6086 | GanedenBC | Ganeden Biotech | Steigert die Immunantwort bei viraler Infektion |
| *Bifidobacterium animalis* subsp. *lactis* B B-12 | Probio-Tec Bifidobacterium BB-12 | Chr. Hansen | Klinische Studien am Menschen haben gezeigt, dass BB-12 das gastrotestinale System positiv beeinflusst. |
| *Bifidobacterium infantis* 35624 | Align | Procter& Gamble | In einer vorläufigen Studie wurde gezeigt, dass das Bakterium abdominale Schmerzen verringern kann. |
| *Lactobacillus acidophilus* NCFM | | Danisco | Aus einer Studie geht hervor, dass die Nebeneffekte von antibiotischen Behandlungen verringert werden. |
| *Lactobacillus paracasei* St11 (or NCC2461) | | | |
| *Lactobacillus johnsonii* La1 (= *Lactobacillus* LC1, *Lactobacillus johnsonii* NCC533) | | Nestlé | Verringert Gastritisbeschwerden und vemindert Entzündungen |
| *Lactobacillus plantarum* 299v | GoodBelly/ProViva/ProbiMage | Probi | Könnte IBS Symptome verbessern; jedoch noch mehr Studien erforderlich. |
| *Lactobacillus reuteri* American Type Culture Collection \|ATTC 55730 (*Lactobacillus reuteri* SD2112) | | BioGaia | Erste Anzeichen für eine Wirksamkeit gegen Gangivitis, Fieber bei Kindern und Verminderung der Krankheitstage bei Erwachsenen. |
| *Lactobacillus reuteri* Protectis (DSM 17938, daughter strain of ATCC 55730) | | | |
| *Lactobacillus reuteri* Protectis (DSM 17938, daughter strain of ATCC 55730) | | | |
| *Saccharomyces boulardii* | DiarSafe and others | Wren Laboratories | Beschränkter Nachweis bei der Behandlung von akuten Durchfallerkrankungen. |
| *Lactobacillus rhamnosus* GR-1 *& Lactobacillus reuteri* RC-14 | Bion Flore Intime/ Jarrow Fem-Dophilus | Chr. Hansen | In einer Studie Nachweis der Wirksamkeit gegen Vaginitis. |
| *Lactobacillus acidophilus* NCFM *& Bifidobacterium bifidum* BB-12 | Florajen3 | American Lifeline, Inc | Erste Hinweise auf Wirksamkeit gegen CDAD |
| *Lactobacillus acidophilus* CL1285 *& Lactobacillus casei* LBC80R | Bio-K+ CL1285 | Bio-K+ International | Hinweise auf Verbesserung bei der Verdauung, speziell im Hinblick auf Lactoseintoleranz. |
| *Lactobacillus plantarum* HEAL 9 *& Lactobacillus paracasei* 8700:2 | Bravo Friscus/ ProbiFrisk | Probi | Derzeit laufen Untersuchungen zur Wirksamkeit gegen Erkältungserkrankungen. |

Im Folgenden werden zwei weitere Formen von Milchsäurebakterien genannt, die ebenfalls als Probiotika eingesetzt werden können:
- *Lactobacillus bulgaricus;*
- *Streptococcus thermophilus;*

### Antioxidantien

In der Lebensmittelindustrie werden sowohl natürliche als auch künstliche Antioxidationsmittel verwendet. Natürliche und künstliche Antioxidantien unterscheiden sich in erster Linie dadurch, dass erstere natürlich in der Nahrung vorkommen und letztere künstlich hergestellt werden. So werden natürliche Antioxidationsmittel, so sie als Lebensmittelzusatzstoff eingesetzt werden sollen, beispielsweise aus Pflanzenölen gewonnen. Vitamin E - auch als Tocopherol bekannt - wird beispielsweise häufig aus Sojaöl hergestellt. Synthetische Antioxidantien wie das Propylgallat, das Octylgallat und das Dodecylgallat werden dagegen durch chemische Synthese gewonnen. Die Gallate können bei empfindlichen Personen Allergien auslösen. Weitere einsetzbare Antioxidantien in Zusammensetzungen der vorliegenden Erfindung sind: Schwefeldioxid (E 220), Sulfite Natriumsulfit (E 221), Natriumhydrogensulfit (E 222), Natriumdisulfit (E 223), Kaliumdisulfit (E 224), Kalziumsulfit (E 226), Kalziumhydrogensulfit (E 227), Kaliumhydrogensulfit (E 228), Milchsäure (E 270), Ascorbinsäure (E 300), Natrium-L-Ascorbat (E 301), Calcium-L-Ascorbat (E 302), Ascorbinsäureester (E 304), Tocopherol (E 306), Alpha-Tocopherol (E 307), Gamma-Tocopherol (E 308), Delta-Tocopherol (E 309), Propylgallat (E 310), Octygallat (E 311), Dodecylgallat (E 312), Isoascorbinsäure (E 315), Natriumisoascorbat (E 316), tertiär-Butylhydrochinon (TBHQ) (E 319), Butylhydroxianisol (E 320), Butylhydroxitoluol (E 321), Lecithin (E 322), Citronensäure (E 330), Salze der Zitronensäure (E 331 & E 332), Natriumzitrat (E 331), Kaliumzitrat (E 332), Calcium-Dinatrium-EDTA (E 385), Diphosphate (E 450), Dinatriumdiphosphat (E 450a), Trinatriumdiphosphat (E 450b), Tetranatriumdiphosphat (E 450c), Dikaliumdiphosphat (E 450d), Trekaliumdiphosphat (E 450e), Dikalziumdiphosphat (E 450f), Kalziumdihydrogendiphosphat (E 450g), Triphosphate (E 451), Pentanatriumtriphosphat (E 451a), Pentakaliumtriphosphat (E 451b), Polyphosphat (E 452), Natriumpolyphosphat (E 452a), Kaliumpolyphosphat (E 452b), Natriumkalziumpolyphosphat (E 452c), Kalziumpolyphosphat (E 452d), Zinn-II-Chlorid (E 512).

### Emulgatoren

Emulgatoren zeichnen sich durch die wichtige Eigenschaft aus, sowohl in Wasser als auch in Fett löslich zu sein. Emulgatoren bestehen meist aus einem fettlöslichen und einem wasserlöslichen Teil. Sie kommen immer dann zum Einsatz, wenn Wasser und Öl zu einer beständigen, homogenen Vermischung gebracht werden sollen.

Geeignete Emulgatoren, die in der lebensmittelverarbeitenden Industrie verwendet werden sind ausgewählt aus: Ascorbylpalmitat (E 304), Lezithin (E 322), Phosphorsäure (E 338), Natriumphosphat (E 339), Kaliumphosphat (E 340), Kalziumphosphat (E 341), Magnesiumorthophosphat (E 343), Propylenglykolalginat (E 405), Polyoxyethylen(8)stearat (E 430), Polyoxyethylenstearat (E 431), Ammoniumphosphatide (E 442), Natriumphosphat und Kaliumphosphat (E 450), Natriumsalze der Speisefettsäuren (E 470 a), Mono- und Diglyceride von Speisefettsäuren (E 471), Essigsäuremonoglyceride (E 472 a), Milchsäuremonoglyceride (E 472 b), Zitronensäuremonoglyceride (E 472 c), Weinsäuremonoglyceride (E 472 d), Diacetylweinsäuremonoglyceride (E 472 e), Zuckerester von Speisefettsäuren (E 473), Zuckerglyceride (E 474), Polyglyceride von Speisefettsäuren (E 475), Polyglycerin-Polyricinoleat (E 476), Propylenglykolester von Speisefettsäuren (E 477), Natriumstearoyllaktylat (E 481), Calciumstearoyl-2-lactylat (E 482), Stearyltartrat (E 483), Sorbitanmonostearat (E 491), Stearinsäure (E 570).

### Lebensmittelfarbstoffe

Lebensmittelfarbstoffe oder kurz Farbstoffe sind Lebensmittelzusatzstoffe zum Färben von Lebensmitteln. Farbstoffe werden in die Gruppen der natürlichen Farbstoffe und synthetischen Farbstoffe unterteilt. Die naturidentischen Farbstoffe sind ebenfalls synthetischen Ursprungs. Die naturidentischen Farbstoffe sind synthetische Nachbildungen von in der Natur vorkommenden, färbenden Substanzen. Geeignete Farbstoffe für den Einsatz in der vorliegenden Zusammensetzung sind ausgewählt aus: Kurkumin (E 100), Riboflavin, Laktoflavin, Vitamin B2 (E 101), Tartrazin (E 102), Chinolingelb (E 104), Gelborange S, Gelborange RGL (E 110), Cochenille, Karminsäure, echtes Karmin (E 120), Azorubin, Carmoisin (E 122), Amaranth (E 123), Cochenillerot A, Ponceau 4 R, Victoriascharlach 4 R (E 124), Erythrosin (E 127), Allurarot AC (E 129), Patentblau V (E 131), Indigotin, Indigo-Karmin (E 132), Brillantblau FCF, Patentblau AE, Amidoblau AE (E 133), Chlorophylle, Chlorophylline (E 140), Kupferkomplexe der Chlorophylle, Kupfer-Chlorophyllin-Komplexe (E 141), Brillantsäuregrün, Grün S (E 142), Zuckerkulör, Zuckercouleur (E 150 a), Sulfitlaugen-Zuckerkulör (E 150 b), Ammoniak-Zuckerkulör (E 150 c), Ammoniumsulfit-Zuckerkulör (E 150 d), Brillantschwarz FCF, Brillantschwarz PN, Schwarz PN (E 151), Pflanzenkohle (E 153), Braun FK (E 154), Braun HT (E 155), Carotin, Karotin (E 160 a), Annatto, Bixin, Norbixin (E 160 b), Capsanthin, Capsarubin (E 160 c), Lycopin (E 160 d), Beta-apo-8'-Carotinal, Apocarotinal, Beta-Apocarotinal (E 160 e), Beta-apo-8'-Carotinsäure-Ethylester (C30), Apocarotinester, Beta-Carotinsäureester (E 160 f), Lutein, Xanthophyll (E 161 b), Canthaxanthin (E 161 g), Betanin, Betenrot (E 162), Anthocyane (E 163), Calciumcarbonat (E 170), Titandioxid (E 171), Eisenoxide, Eisenhydroxide (E 172), Aluminium (E 173), Silber (E 174), Gold (E 175), Litholrubin BK, Rubinpigment BK (E 180).

### BEISPIELE

### Beispiele 1 bis 7 Vergleichsbeispiel V1

Eine Aminosäurezubereitung bestehend aus Leucin, Valin und Isoleucin im Verhältnis 1,8 : 1,2 : 1 wurde in Wasser gelöst, um ein verzehrfähiges Produkt (V1) zu erhalten. Für die Herstellung weiterer Zubereitungen wurde die Aminosäuremischung bestehend aus Leucin, Valin und Isoleucin im Verhältnis 1,8 : 1,2 : 1 jeweils mit Cellulosederivaten unterschiedlichem Polymerisationsgrades sowie gegebenenfalls mit Dextrinen mit unterschiedlichen Dextrose-Äquivalenten, Säuerungsmitteln und Süßstoffen versetzt. Diese Zubereitungen wurden wie V1 in Wasser zu verzehrfähigen Produkten (1-7) aufgelöst. Die Mengen an gelösten Aminosäuren sowie die Viskositäten sind in den verzehrfähigen Produkten V1 bzw. 1-7 identisch. Die Lösungen wurden dann von einem Panel bestehend aus 5 erfahrenen Testern geschmacklich beurteilt. Die Bitterkeit wurde dabei auf folgender Skala bewertet: Skala von 0 (kein Eindruck) bis 10 (sehr starker Eindruck). Die Zusammensetzung der verzehrfähigen Produkte und ihre Bewertung (Mittelwert aus 5 Testern und Dreifachbestimmung) sind in **Tabelle 1** wiedergegeben.

**Tabelle 1**

| Zusammensetzung der verzehrfähigen Produkte und geschmackliche Bewertung (Angaben in Gew.-%) | | | | | | | | |
|---|---|---|---|---|---|---|---|---|
| **Komponente** | **V1** | **1** | **2** | **3** | **4** | **5** | **6** | **7** |
| L-Leucin | 0,9 | 0,9 | 0,9 | 0,9 | 0,9 | 0,9 | 0,9 | 0,9 |
| L-Valin | 0,6 | 0,6 | 0,6 | 0,6 | 0,6 | 0,6 | 0,6 | 0,6 |
| L-Isoleucin | 0,5 | 0,5 | 0,5 | 0,5 | 0,5 | 0,5 | 0,5 | 0,5 |
| CMC1 | | 0,4 | | 0,4 | 0,4 | 0,4 | 0,4 | 0,4 |
| CMC2 | | | 0,05 | | | | | |
| Maltodextrin DE 15-19 | | | | 1 | | 1 | | 1 |
| Maltodextrin DE6 | | | | | | | 5 | |
| Symrise Maskierungsaroma 1, sprühgetrocknet | | | | | 0,2 | 0,2 | 0,2 | 0,2 |
| | | | | | | | | |
| Zitronensäure | | | | | | | | 0,1 |
| Sucralose | | | | | 0,01 | | | 0,007 |
| Wasser | Ad 100 | | | | | | | |
| Beurteilung Bittergeschmack | **8,0** | **6,0** | **7,5** | **5,5** | **4,8** | **5,1** | **5,0** | **4,1** |

| | | | | | | | | |
|---|---|---|---|---|---|---|---|---|
| 1) WALOCEL CRT 30 PA 2) WALOCEL CRT 10.000 GA | | | | | | | | |

Die Beispiele zeigen deutlich, dass insbesondere der Zusatz des niedrig viskosen Cellulosederivates den Bittergeschmack der Aminosäuremischung signifikant vermindert. Durch Kombination mit Dextrinen kann die Effektivität noch verstärkt werden.

## Patentansprüche

1. Stoffgemische, enthaltend
(a) Natriumcarboxymethylcellulose und
(b) mindestens einen Bitterstoff ausgewählt aus der Gruppe, die gebildet wird von phenolischen Glycosiden, Flavanoidglycosiden, hydrolysierbaren oder nicht hydrolysierbaren Tanninen, Flavonen und deren Glycosiden, terpenoiden Bitterstoffen, Catechin, Epicatechin, Epigallocatechin, Gallocatechin, Gallocatechin-3-gallat, verzweigten Aminosäuren, Proteinhydrolysaten, Peptiden und Metallsalzen sowie deren Gemischen
sowie gegebenenfalls
(c) Dextrine
mit der Maßgabe, dass die Komponenten (a) und (b) im Gewichtsverhältnis von 1:1 bis 1:1000 vorliegen.

2. Stoffgemische nach Anspruch 1, **dadurch gekennzeichnet, dass** die Natriumcarboxymethylcellulose ein Molekulargewicht von 15 bis 90 kDa aufweist.

3. Stoffgemische nach mindestens einem der Ansprüche 1 bis 2, **dadurch gekennzeichnet, dass** die Natriumcarboxymethylcellulose eine Viskosität in 2 Gew.-%iger wässriger Lösung von 15 bis 100 mPas (2%ig, LVT-Viskosimeter, Spindel 1, 25°C, 60rmp) aufweist.

4. Stoffgemische nach mindestens einem der Ansprüche 1 bis 3, **dadurch gekennzeichnet, dass** die Komponenten (a) und (b) im Gewichtsverhältnis von 1:2 bis 1:500 vorliegen.

5. Stoffgemische nach mindestens einem der Ansprüche 1 bis 4, **dadurch gekennzeichnet, dass** die Komponenten (a) und (b) im Gewichtsverhältnis von 1:2 bis 1:50 vorliegen.

6. Stoffgemische nach mindestens einem der Ansprüche 1 bis 5, **dadurch gekennzeichnet, dass** sie als Komponente (c) Dextrine mit einem DE Wert von 5 - 20 enthalten.

7. Stoffgemische nach mindestens einem der Ansprüche 1 bis 6, **dadurch gekennzeichnet, dass** sie weiterhin als Komponente (d) geschmacksbeeinflussende Stoffe enthalten können.

8. Nahrungsmittel, enthaltend die Stoffgemische gemäß Anspruch 1.

9. Verwendung von Natriumcarboxymethylcellulose zur Maskierung des bitteren Geschmacks von Bitterstoffen ausgewählt aus der Gruppe, die gebildet wird von phenolisehen Glycosiden, Flavanoidglycosiden, hydrolisierbaren oder nicht hydrolysierbaren Tanninen, Flavonen und deren Glycosiden, terpenoiden Bitterstoffen, Catechin, Epicatechin, Epigallocatechin, Gallocatechin, Gallocatechin-3-gallat, verzweigten Aminosäuren, Proteinhydrolysaten, Peptiden und Metallsalzen sowie deren Gemischen.

10. Verwendung nach Anspruch 9, **dadurch gekennzeichnet, dass** man die Natriumcarboxymethylcellulose zusammen mit Dextrinen einsetzt.

## Claims

1. Substance mixtures, containing
(a) sodium carboxymethylcellulose and
(b) at least one bitter substance selected from the group, which is formed by phenolic glycosides, flavanoid glycosides, hydrolysable or non-hydrolysable tannins, flavones and their glycosides, terpenoid bitter substances, catechine, epicatechine, epigallocatechine, gallocatechine, gallocatechine-3-gallate, branched amino acids, protein hydrolysates, peptides and metal salts as well as their mixtures
as well as optionally
(c) dextrins
with the proviso, that the components (a) and (b) are present in the weight ratio of from 1:1 to 1:1000.

2. Substance mixtures according to claim 1, **characterized in that** the sodium carboxymethylcellulose has a molecular weight from 15 to 90 kDa.

3. Substance mixtures according to at least one of the claims 1 to 2, **characterized in that** the sodium carboxymethylcellulose has a viscosity in 2 wt.-% aqueous solution of 15 to 100 mPas (2%, LVT-Viskometer, Spindle 1, 25°C, 60rmp).

4. Substance mixtures according to at least one of the claims 1 to 3, **characterized in that** the components (a) and (b) are present in the weight ratio of from 1:2 to 1:500.

5. Substance mixtures according to at least one of the claims 1 to 4, **characterized in that** the components (a) and (b) are present in the weight ratio of from 1:2 to 1:50.

6. Substance mixtures according to at least one of the claims 1 to 5, **characterized in that** they contain as compound (c) dextrins with a DE value of 5 - 20.

7. Substance mixtures according to at least one of the claims 1 to 6, **characterized in that** they can further contain as component (d) substances that influence the taste.

8. Foodstuff containing the substance mixtures according to claim 1.

9. Use according to sodium carboxymethylcellulose for masking of the bitter taste of bitter substance selected from the group, which is formed by phenolic glycosides, flavanoid glycosides, hydrolysable or non- hydrolysable tannins, flavones and their glycosides, terpenoid bittering agents, catechine, epicatechine, epigallocatechine, gallocatechine, gallocatechine-3-gallate, branched amino acids, protein hydrolysates, peptides and metal salts as well as their mixtures.

10. Use according to claim 9, **characterized in that** the sodium carboxymethylcellulose is applied together with dextrins.

## Revendications

1. Mélanges de substances contenant
(a) de la carboxyméthylcellulose de sodium et
(b) au moins une substance amère choisie dans le groupe qui est constitué par les glycosides phénoliques, les glycosides flavonoïdes, les tanins hydrolysables ou non hydrolysables, les flavones et leurs glycosides, les substances amères terpénoïdes, la catéchine, l'épicatéchine, l'épigallocatéchine, la gallocatéchine, le gallocatéchine-3-gallate, les acides aminés ramifiés, les hydrolysats de protéines, les peptides et les sels métalliques ainsi que leurs mélanges
ainsi que, le cas échéant,
(c) des dextrines
à condition que les composants (a) et (b) soient présents dans un rapport pondéral compris entre 1 : 1 et 1 : 1000.

2. Mélanges de substances selon la revendication 1, **caractérisés par le fait que** la carboxyméthylcellulose de sodium présente un poids moléculaire compris entre 15 et 90 kDa.

3. Mélanges de substances selon l'une au moins des revendications 1 à 2, **caractérisés par le fait que** la carboxyméthylcellulose de sodium présente, dans une solution aqueuse à 2 % en poids, une viscosité comprise entre 15 et 100 mPas (à 2%, viscosimètre LVT, broche 1, 25 °C, 60 tours/minute).

4. Mélanges de substances selon l'une au moins des revendications 1 à 3, **caractérisés par le fait que** les composants (a) et (b) sont présents dans un rapport pondéral compris entre 1 : 2 et 1 : 500.

5. Mélanges de substances selon l'une au moins des revendications 1 à 4, **caractérisés par le fait que** les composants (a) et (b) sont présents dans un rapport pondéral compris entre 1 : 2 et 1 : 50.

6. Mélanges de substances selon l'une au moins des revendications 1 à 5, **caractérisés par le fait qu'**ils contiennent en tant que composant (c) des dextrines ayant une valeur DE comprise entre 5 et 20.

7. Mélanges de substances selon l'une au moins des revendications 1 à 6, **caractérisés par le fait qu'**ils peuvent contenir en outre, en tant que composant (d), des substances influençant le goût.

8. Denrées alimentaires contenant les mélanges de substances selon la revendication 1.

9. Utilisation de carboxyméthylcellulose de sodium pour masquer le goût amer de substances amères choisies dans le groupe qui est constitué par les glycosides phénoliques, les glycosides flavonoïdes, les tanins hydrolysables ou non hydrolysables, les flavones et leurs glycosides, les substances amères terpénoïdes, la catéchine, l'épicatéchine, l'épigallocatéchine, la gallocatéchine, le gallocatéchine-3-gallate, les acides aminés ramifiés, les hydrolysats de protéines, les peptides et les sels métalliques ainsi que leurs mélanges.

10. Utilisation selon la revendication 9, **caractérisée par le fait que** l'on utilise la carboxyméthylcellulose de sodium conjointement avec des dextrines.
